**Europäisches Patentamt**

**European Patent Office**

**Office européen des brevets**

(19)

(11) Veröffentlichungsnummer : **0 360 749 B1**

(12) # EUROPÄISCHE PATENTSCHRIFT

(45) Veröffentlichungstag der Patentschrift :
**03.06.92 Patentblatt 92/23**

(51) Int. Cl.$^5$ : **B01J 2/14**

(21) Anmeldenummer : **89810684.4**

(22) Anmeldetag : **13.09.89**

(54) **Vorrichtung zur Herstellung eines kugelförmigen Granulates.**

(30) Priorität : **22.09.88 CH 3524/88**

(43) Veröffentlichungstag der Anmeldung :
**28.03.90 Patentblatt 90/13**

(45) Bekanntmachung des Hinweises auf die
Patenterteilung :
**03.06.92 Patentblatt 92/23**

(84) Benannte Vertragsstaaten :
**CH DE FR GB IT LI NL**

(56) Entgegenhaltungen :
**EP-A- 0 228 633**
**DE-A- 3 523 990**
**US-A- 4 588 366**

(73) Patentinhaber : **CIBA-GEIGY AG**
**Klybeckstrasse 141**
**CH-4002 Basel (CH)**

(72) Erfinder : **Christen, Daniel**
**Gotenstrasse 10**
**CH-4125 Riehen (CH)**

EP 0 360 749 B1

## Beschreibung

Die Erfindung betrifft eine Vorrichtung gemäss Obergriff des Patentanspruchs 1. Derartige Vorrichtungen werden auch als Sphärolatoren oder Ausrunder bezeichnet.

Arzneimittel in Form von kleinen Kugeln (Pellets) weisen eine Reihe von Vorteilen auf. Die Kugelform hat das kleinstmögliche Oberflächen/Volumen-Verhältnis und weist damit eine gute Verträglichkeit für den Patienten auf. Die besonders gute Fliesseigenschaft der Kugeln erlaubt einfaches Mischen unterschiedlicher Kugeln in Kapseln, aus denen die Wirkstoffe später im Körper freigegeben werden. Aus diesem Grund finden kugelförmige Granulate in der Arzneimittelherstellung eine breite Anwendung.

In Vorrichtungen der erfindungsgemässen Art wird entweder Pulver zum gewünschten kugelförmigen Granulat agglomeriert oder es werden Teile, welche grösser sind als das gewünschte kugelförmige Granulat, z.B. ein strangförmiges Extrudat oder zylinderförmiges Granulat zunächst in etwa gleich grosse Teilchen zerlegt und dann zu Kugeln gerundet. Bei der Verarbeitung von Extrudatsträngen weisen die fertigen Kugeln einen Durchmesser etwa in Grösse des Durchmessers des Extrudatstranges auf (0,8 bis 1,2 mm).

In der US-Re. 27,214 ist ein Sphärolator beschrieben, bei dem das zu rundende Gut (Pulver, Extrudat etc.) von der rotierenden Scheibe durch Zentrifugalkraft nach aussen und an der Gehäusewand nach oben getrieben wird. Von oben fallen die Teilchen aufgrund ihrer Schwerkraft wiederum nach unten auf die Scheibe zurück, um erneut zentrifugal beschleunigt zu werden usw. Insgesamt wird das zu rundende Material während des Bearbeitungvorgangs etwa schraubenlinienförmig entlang der Gehäusewand bewegt, wobei sich durch Stösse und Reibung die Kugelform bildet. Nach diesem Prinzip arbeiten auch die Sphärolatoren Model 15 und Model 27 der Firma G.B. Caleva Ltd., Newcastle, England.

In der US-A-4,588,366 ist ein zweiteiliger Sphärolator beschrieben. Er umfasst eine Agglomerationskammer und einen darüber angeordnet Filterteil. Innerhalb der Kammer ist ein Rotationsteller höherverstellbar angeordnet. Diese Höhenverstellbarkeit zusammen mit der konischen Form des Kammermantels erlaubt eine Verstellung der Breite des Ringspaltes zwischen dem Mantel und dem Teller. Durch diesen Ringspalt wird Luft nach oben in die Kammer geleitet. Durch diesen Luftstrom und die Rotation des Tellers wird das seitlich oberhalb des Tellers eingesprühte Pulver in eine Art Rotation versetzt. Die Durchmischung des entstehenden Aufbaugranulates ist jedoch nicht sehr gut, ein Teil des Granulates neigt dazu, auf den unteren Schichten "aufzuschwimmen". Ausserdem ist die Straubentwicklung sehr gross, weshalb auch das oberhalb der Agglomerationskammer angeordnete Filterteil unerlässlich ist.

In der EP-A-0,228,633 ist ein Zwei-Kammer Sphärolator beschrieben. Aus einem zentralen Bearbeitungsraum gelangt das auf einer rotierenden Scheibe liegende Pulver durch Zentrifugalkraft in einen äusseren Ringraum. In diesen Ringraum wird von unten her Trocknungs- und Treibluft eingeleitet. Auf diese Weise wird das Pulver in Ringraum getrocknet und kann wieder in den zentralen Bearbeitungsraum zurückbefördert werden. Zum Zwecke der Agglomeration kann das Pulver innerhalb des zentralen Bearbeitungsraums über Düsen befeuchtet werden. Die Durchmischung des entstehenden Aufbaugranulates ist nicht sehr gut. Auch bei diesem Sphärolator tendiert ein Teil des Granulates dazu auf den unteren Schichten "aufzuschwimmen". Die Staubentwicklung ist sehr hoch. Aus diesem Grund muss oberhalb des zentralen Behandlungsraumes ein Filtersystem vorgesehen sein.

In der DE-A-3,523,990 ist eine sogenannte Fliessbettapparatur beschrieben. Diese umfasst einen etwa kugelförmigen Behälter mit Ringkanal und Ringspalt im unteren Bereich. Im Betrieb wird Luft von unten in den Behälter geleitet und von einem in oberen Bereich angeordneten Ablenkschirm nach aussen und unten umgelenkt, so dass sich ein toroidförmiger Wirbel bildet. Durch den Ringspalt wird zusätzlich Luft schräg nach oben geleitet, welche ein unteres Luftpolster bildet. Ein eingesprühtes Flüssigkeits- oder Feststoffgemisch wird zwischen dem oberen Luftwirbel und dem unteren Luftpolster behandelt. Diese Fliessbettapparatur eignet sich gut zum Umhüllen von Granulaten oder zum Auftragen von Wirkstoff. Für die Agglomeration von Pulvern ist sie wegen der grossen Staubentwicklung jedoch weniger gut geeignet.

Ziel des Ausrundungsprozesses ist, feste, gleichförmige Kugeln zu schaffen, die möglichst alle den gleichen Durchmesser aufweisen. Die Lösung dieser Aufgabe ist schwierig, da sie von vielen, teilweise auch widersprüchlichen Komponenten abhängt. So ist bereits die Formulierung und damit Beschaffenheit des Ausgangsguts problematisch. Strangförmiges Extrudat soll gerade so fest zusammenhalten, dass es im Sphärolator einerseits auseinanderbricht dabei aber andererseits nicht in zu kleine Teile zerfällt. Das Extrudat darf auch nicht klebrig sein, da dann Teile zusammenkleben bzw. am Gehäuse kleben bleiben. Aehnlich gilt für pulverförmiges Gut, dass es zu Kugeln agglomerieren soll, gleichzeitig die Kugeln aber nicht aneinander kleben dürfen. Dafür werden flüssige Bindemittel dem Pulver beigemengt.

Mit den bislang bekanntgewordenen Sphärolatoren konnte die gestellte Aufgabe nur teilweise gelöst werden. Dies gilt auch für den in einer Werbeschrift PR 85.3 der Firma Aeromatic Inc. Towaco, N.J., USA beschriebenen Sphärolator, bei welchem die Schleuderscheibe am Rand eine schräge Kante aufweist, so dass der Uebergang auf die Gehäusewand etwa im Winkel von 45°erfolgt. Die dadurch erzielte Verbesserung ist jedoch unzureichend.

Die aufgezeigten Mängel des Standes der Technik sollen durch die Erfindung behoben werden. Es soll ein Sphärolator geschaffen werden, welcher bei verringerten Anforderungen an das Ausgangsmaterial möglichst exakte Kugelformen mit möglichst geringen Durchmesserstreuungen generiert.

Die gestellte Aufgabe wird gemäss Kennzeichen des Patentanspruchs 1 gelöst.

Die Wirkung der erfindungsgemässen Ablenkmittel, welche die an der Gehäusewand nach oben getriebene Substanz zwangsläufig nach innen und/oder unten ablenken, bevor diese ihren "natürlichen" oberen Wendepunkt erreicht, dürfte vor allem darauf beruhen, dass dadurch verhindert wird, dass ein Teil des zu behandelnden Gutes im Bereich des oberen Wendepunktes "aufschwimmt" und sich dem Kreislauf zeitweise entzieht. Verglichen mit dem bekannten Stand der Technik wird dadurch eine sprunghafte Verbesserung fast aller Parameter erreicht.

Im folgenden wird die Erfindung anhand von vier in den Zeichnungen dargestellten Ausführungsbeispielen näher erläutert; es zeigen:

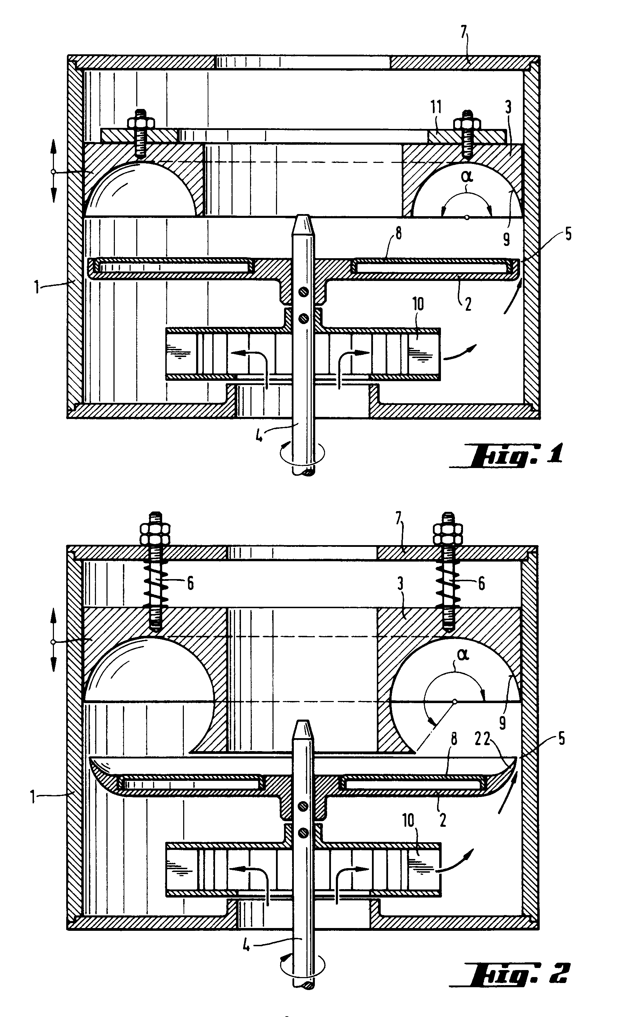

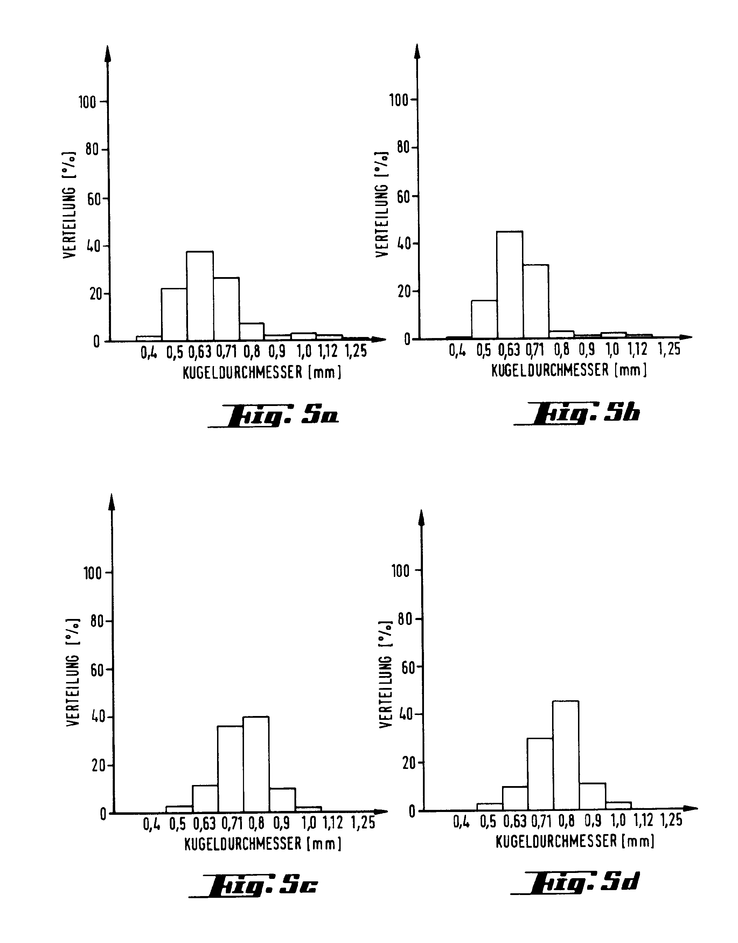

Fig. 1 bis 4 die vier Ausführungsbeispiele jeweils im Axialschnitt und Fig. 5a-5d Diagramme zur Erläuterung der Wirkungsweise.

Den vier Ausführungsbeispielen gemeinsam ist ein zylindrisches Gehäuse 1, in dem zentrisch eine kreisförmige Scheibe 2 horizontal angeordnet ist. Die Scheibe 2 ist fest mit einer zentralen Antriebswelle 4 verbunden, welche über ein Getriebe mit einem Antriebsmotor (nicht dargestellt) gekoppelt ist.

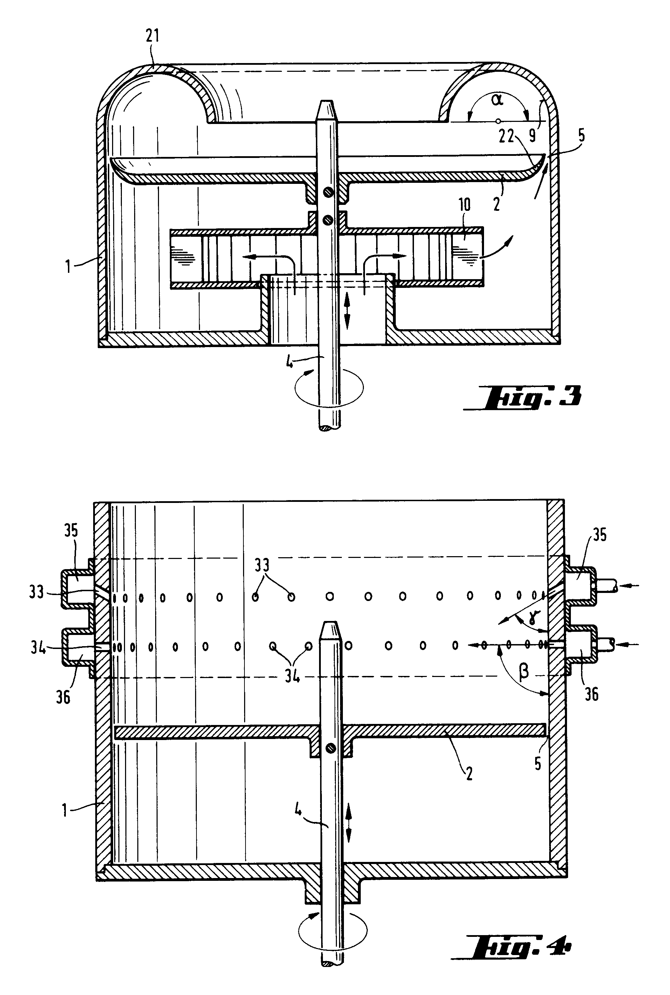

Die vier Ausführungsbeispiele unterscheiden sich insbesondere durch die verschiedene Realisierung der oberhalb der Schleuderscheibe 2 und im Abstand von dieser angeordneten Ablenkmittel. Diese sind in den Ausführungsbeispielen der Fig. 1 und 2 durch (je) ein ringförmiges Formteil 3 gebildet. Dieses ist in der Fig. 1 reibungsarm und frei höhenbeweglich im Gehäuse geführt. In der Fig. 2 ist das Formteil 3 mittels vertikaler Bolzen 6 höhenverstellbar am Gehäusedeckel 7 hängend befestigt. In Fig. 3 sind die Ablenkmittel durch den nach innen gekrümmten oberen Randbereich 21 des Gehäuses 1 gebildet und in Fig. 4 durch zwei parallele Düsenringe 33 und 34.

Die gekrümmte Ablenkfläche ist in den Ausführungsbeispielen Fig. 1 bis Fig. 3 im Querschnitt konkav über der Schleuderscheibe 2 gewölbt. Vorzugsweise ist diese Wölbung im Querschnitt kreisbogenförmig ausgebildet (konstanter Krümmungsradius), wobei der Krümmungswinkel $\alpha$ etwa 180° (Fig. 1 und Fig. 3) bzw. 230° (Fig. 2) beträgt. Mit "Krümmungswinkel" $\alpha$ ist derjenige Winkel bezeichnet, den die Normale auf die Tangente der Krümmung am Beginn der Krümmung mit derjenigen am Ende der Krümmung einschliesst. Bei konstanter Krümmung (Kreisbogen) wird dieser Winkel als Zentriwinkel bezeichnet.

Andere Ausbildungsformen der Erfindung sehen auch Querschnitte der Ablenkfläche 9 mit variablem Krümmungsradius vor. Wesentlich ist, dass das auszurundende Gut ins Gehäuseinnere und wieder auf die Schleuderscheibe 2 zurückgelenkt wird. Bei einem stetigen Uebergang zwischen Gehäuse und Ablenkfläche 9 (Winkel 0°) ist deswegen der Krümmungswinkel $\alpha$ vorzugsweise grösser als 90°. Bei einem unstetigen Uebergang muss von diesem Winkel derjenige Winkel abgezogen werden, mit dem die gekrümmte Fläche 9 von der Gehäusewand ausgeht, damit die Krümmungsfläche in ihrem Endbereich mit der Horizontalen wiederum denselben Winkel einschliesst. Der Krümmungswinkel $\alpha$ darf aber auch nicht zu gross gewählt werden, denn sonst wird das Gut durch die Ablenkfläche 9 zu weit nach aussen auf die Schleuderscheibe 2 gelenkt. Ein Krümmungswinkel von etwa 240° ist noch geeignet. Auch hier muss bei einem unstetigen Uebergang zum Gehäuse 1 der Winkel, mit dem die Ablenkfläche von der Gehäusewand ausgeht, abgezogen werden.

Der Uebergang von der Gehäusewand zu der gekrümmten, ringförmigen Ablenkfläche 9 ist in den gezeigten Ausführungsbeispielen Fig. 1 bis Fig. 3 stetig (Winkel 0°). Bei unstetigem Uebergang darf der "Uebergangswinkel" nicht zu gross sein (maximal 70°).

Die Ablenkfläche des Formteils 3 bzw. des gewölbten Gehäuserandes 21 ist im allgemeinen glatt ausgeführt. Sie kann aber auch ganz oder teilweise profiliert oder rauh ausgebildet sein. In diesem Fall verlieren die auszurundenden Teilchen infolge erhöhter Reibung und Stossbelastung schneller an Energie und fallen früher auf die Schleuderscheibe 2 zurück.

Die Grösse des Formteils 3 bzw. sein Querschnitt ist abhängig von der Menge des auszurundenden Materials. Insgesamt muss das Volumen des Ringes, in dem sich die schraubenlinienförmige Windungsbewegung ausbildet, eine freie Bewegung des auszurundenden Guts zulassen. Die Ablenkfläche 9 des Formteils 3 bzw. des nach innen gebogenen Gehäuserands 21 erstreckt sich vorzugsweise über 50 % bis 90 % des Gehäusequerschnitts.

Damit sich eine geeignete Windungsbewegung ausbilden kann, wird der Abstand des Formteils 3 zur Schleuderscheibe 2 so eingestellt, dass das an der Gehäusewand nach oben getriebene Gut zwangsläufig nach innen und wieder nach unten abgelenkt wird, bevor es seinen "natürlichen" oberen Umkehrpunkt erreicht, andererseits aber nicht so gering dass die Umlaufzeit der Teilchen zu kurz bzw. der Ablauf der Windungsbewegung nachteilig beeinträchtigt wird. Zur Regulierung des Abstands wird entweder das Formteil 3 in seiner Höhe im Gehäuse verstellt (Fig. 2) oder es wird die Höhenlage der Schleuderscheibe 2 verändert. In den Ausrundern nach Fig. 3 und Fig. 4 kann dieser Abstand nur über eine Höhenverstellung der Schleuderscheibe 2 eingestellt werden (nicht dargestellt).

Im Ausführungsbeispiel der Fig. 1 wird zur Abstandsregulierung das Gewicht des Formteils 3 ausgenutzt. In diesem Gerät wird das Formteil reibungsarm im Gehäuse geführt. Während des Ausrundens schwimmt das Formteil 3 auf dem Gut. Der Abstand zur Schleuderscheibe stellt sich abhängig von der Menge des Guts, von der Geschwindigkeit der Schleuderscheibe 2 und dem Gewicht des Formteils 3 automatisch ein. Der Abstand kann zusätzlich durch Gewichte z.B. in Form von auf das Formteil 3 auflegbaren Ringen 11 variiert werden.

Die Oberfläche der Schleuderscheibe 2 weist vorzugsweise eine Rillen/Rippen-Schulter oder dergleichen auf. Mit solchen Flächen, wie sie beispielsweise in Pharmacy International, May 1985, pages 119-123 beschrieben sind, wird ein gutes Rundungsergebnis erzielt. Diese strukturellen Muster können entweder auf der Schleuderscheibe 2 selbst oder auf einem entsprechenden Einsatz 8 realisiert sein.

In Ausführungsbeispielen der Fig. 1 und 4 ist die Schleuderscheibe 2 bis zum Rand eben. In den Ausführungsbeispielen nach den Fig. 2 und 3 ist ihr Randbereich 22 nach oben in einem Krümmungswinkel von etwa 60° gebogen.

Unter der Schleuderscheibe ist in den Geräten nach Fig 1 bis 3 ein Ventilator 10 angeordnet. Er bläst Luft durch den Spalt 5 zwischen Gehäusewand und Schleuderscheibe 2 und unterstützt einerseits die schraubenlinienförmige Windungsbewegung des Guts und verhindert andererseits ein Festsetzen des Guts im Spalt 5. Der Ventilator 10 ist notwendig, wenn Pulver zu einem kugelförmigen Granulat agglomeriert werden soll.

Eine andere Art von Ablenkmitteln wird in dem Gerät nach Fig. 4 verwendet. Durch Düsenringe 33 und 34 mit den Pressluftzuleitungen 35 und 36 wird Luft in das Gehäuseinnere geblasen und bildet einen Luftvorhang, der das Gut nach innen ablenkt. Hier ist die Ablenkung abhängig von dem Luftdruck und von der Richtung (Winkel $\beta$, $\gamma$), mit dem die Düsen auf das Gut blasen. Bei der Verwendung von Pressluftdüsen als Ablenkmittel ist die benötigte relative Luftfeuchtigkeit zu beachten. Der Ausrundungsprozess eines Extrudats verlangt eine höhere relative Luftfeuchtigkeit als die Herstellung der Kugeln aus Pulver. Im ersten Fall muss ein Austrocknen verhindert werden, im zweiten Fall ist Trocknen erwünscht.

Wie bereits dargestellt führt das Gut eine Art schraubenlinienförmige Windungsbewegung aus. Diese Bewegung besitzt somit eine in Umfangsrichtung weisende Komponente. Es ist daher in gewissen Fällen möglich auf ein ringförmiges Ablenkteil zu verzichten und eine im wesentlichen schaufel- oder pflugförmige Schikane zu verwenden. Diese bietet der Umfangskomponente selbstverständlich eine nach unten gerichtete Ablenkfläche und ist in der Umfangsrichtung nur über einen Sektor ausgebildet. Der obere Rand dieser Fläche muss höher im Gehäuse angeordnet sein als der natürliche Umkehrpunkt des Guts. Analog dazu würde bei der Ausführungsform mit Düsen nur eine oder wenige Düsen ausreichen, um das Gut in Richtung Gehäuseachse zu lenken.

Vergleichende Versuche mit einem Ausrunder nach Fig. 1 wurden mit den zwei folgenden chemischen Formulierungen durchgeführt:

1.

| - Tricalciumphosphat | 50 % |
| - mikrokrist. Cellulos | 50 % |
| - Wasser | 100 % der Trockenmasse |

2.

| - Lactose gemahlen | 50 % |
| - mikrokrist. Cellulose | 50 % |
| - Wasser | 60 % der Trockenmasse. |

Die Formulierungen wurden zu zwei strangförmigen Extrudaten verarbeitet; anschliessend wurden jeweils zwei Versuche durchgeführt.

Versuch 1: Ausrunden der Extrudate in einem Gerät nach Fig. 1 ohne Formteil 3.

Versuch 2: Ausrunden der Extrudate in dem gleichen Gerät mit eingesetztem, in der Höhenlage fixiertem Formteil 3.

Nach den Versuchen wurde die Verteilung der Kugeldurchmesser ermittelt und in den Diagrammen der Fig. 5a bis 5d aufgetragen. Fig. 5a zeigt das Ergebnis des Versuchs 1 mit der Formulierung 1, Fig. 5c das Ergebnis mit der Formulierung 2. Fig. 5b zeigt das Ergebnis des Versuchs 2 mit der Formulierung 1 und 5d mit der Formulierung 2. Deutlich ist in den Fig. 5b und 5d die geringere Streuung der Kugeldurchmesser um den Wert 0,63 mm und 0,8 mm zu erkennen.

**Patentansprüche**

1. Vorrichtung zur Herstellung eines kugelförmigen Granulats aus einer Substanz in Form von Pulver, zylinderförmigem oder ungeformtem Granulat, oder strangförmigem Extrudat, umfassend ein feststehendes, rotationssymmetrisches Gehäuse (1) mit vertikaler Achse (4) und eine dieses Gehäuse (1) bodenartig abschliessende Schleuderscheibe (2), welche um die vertikale Gehäuseachse (4) motorisch rotierbar ist, gekennzeichnet durch oberhalb der Schleuderscheibe (2) und im Abstand von dieser wirkende, zusätzlich zum Gehäuse (1) vorgesehene Ablenkmittel (9, 33, 34), welche von der Schleuderscheibe nach aussen und an der Gehäusewand nach oben getriebene Substanz zwangsläufig nach innen und/oder unten ablenken bevor diese ihren "natürlichen" oberen Umkehrpunkt erreichen.

2. Vorrichtung nach Anspruch 1, dadurch gekennzeichnet, dass der Abstand zwischen dem Ablenkmittel (9, 33, 34) und der Schleuderscheibe (2) wahlweise einstellbar ist.

3. Vorrichtung nach Anspruch 1 oder 2, dadurch gekennzeichnet, dass die Ablenkmittel durch eine an die Gehäusewand anschliessende horizontale, ringförmige, im Querschnitt nach oben gekrümmte Ablenkfläche (9) gebildet sind.

4. Vorrichtung nach Anspruch 3, dadurch gekennzeichnet, dass der Uebergang zwischen der Gehäusewand und der Ablenkfläche (9) stetig ist

5. Vorrichtung nach Anspruch 3 oder 4, dadurch gekennzeichnet, dass der Krümmungswinkel ($\alpha$) der Ablenkfläche (9) 90° bis 240° beträgt minus den winkel, mit welchem die gekrümmte Ablenkfläche (9) von der Gehäusewand ausgeht.

6. Vorrichtung nach Anspruch 5, dadurch gekennzeichnet, dass der Krümmungswinkel ($\alpha$) etwa 180° beträgt minus den winkel, mit welchem die gekrümmte Ablenkfläche 9 von der Gehäusewand ausgeht.

7. Vorrichtung nach Anspruch 5, dadurch gekennzeichnet, dass der Krümmungswinkel ($\alpha$) etwa 230° beträgt minus den Winkel mit welchem die gekrümmte Ablenkfläche 9 von der Gehäusewand ausgeht.

8. Vorrichtung nach einem der Ansprüche 2 bis 7, dadurch gekennzeichnet, dass die Ablenkfläche (9) sich über etwa 50 % bis 90 % des Gehäusequerschnitts erstreckt.

9. Vorrichtung nach einem der Ansprüche 2 bis 8, dadurch gekennzeichnet, dass die Ablenkfläche (9) durch die Unterseite eines in das Gehäuse (1) eingepassten Ringes (3) gebildet ist.

10. Vorrichtung nach Anspruch 2 und 9, dadurch gekennzeichnet, dass das Gehäuse (1) mit einem Deckel (7) versehen ist und der Ring (3) höhenverstellbar an diesem Deckel (7) aufgehängt ist.

11. Vorrichtung nach einem der Ansprüche 2 bis 10, dadurch gekennzeichnet, dass die Ablenkfläche (9) glatt ist.

12. Vorrichtung nach einem der Ansprüche 2 bis 10, dadurch gekennzeichnet, dass die Ablenkfläche (9) rauh ist, oder Rillen, Riffelungen oder Aehnliches aufweist.

13. Vorrichtung nach Anspruch 1 oder 2, dadurch gekennzeichnet, dass die Ablenkmittel durch mindestens eine Pressluftdüse (33) gebildet sind.

14. Vorrichtung nach Anspruch 1 oder 2, dadurch gekennzeichnet, dass die Ablenkmittel durch mindestens einen Ring von Pressluftdüsen (33, 34) gebildet sind.

15. Vorrichtung nach Anspruch 9, dadurch gekennzeichnet, dass'das Gehäuse (1) zylindrisch und der Ring (3) reibungsarm frei höhenbeweglich in diesem Gehäuse geführt ist, wobei das Gewicht des Ringes derart festgelegt ist, dass er auf der an der Gehäusewand hochgetriebenen Substanz "schwimmt" und von dieser getragen wird.

16. Vorrichtung nach Anspruch 15, dadurch gekennzeichnet, dass der Ring (3) durch zusätzliche Gewichte (11) belastbar ist.

17. Vorrichtung nach einem oder mehreren der vorangehenden Ansprüche, dadurch gekennzeichnet, dass die Schleuderscheibe (2) aussen um einen Winkel von vorzugsweise 60° hochgebogen ist.

**Claims**

1. An apparatus for making spherical granules from a material in the form of powder, cylindrical or unshaped granules or strand-form extrusions, comprising: a fixed, rotationally symmetrical housing (1) having a vertical shaft (4) and a centrifugal disc (2) which closes the housing (1) in the manner of a base and is rotatable by mens of a motor about the vertical housing shaft (4), which apparatus is characterised by deflecting means (9, 33, 34), provided in addition to the housing (1) and acting above the centrifugal disc (2) and spaced apart therefrom, which cause material propelled outwards by the centrifugal disc and upwards at the wall of the housing to the positively deflected inwardly and/or downwardly before it reaches its "natural" upper turning point.

2. An apparatus according to claim 1 wherein the distance between the deflecting means (9, 33, 34) and

EP 0 360 749 B1

the centrifugal disc (2) can be adjusted as desired.

3. An apparatus according to claim 1 or 2 wherein the deflecting means are formed by a horizontal annular deflecting surface (9) which adjoins the wall of the housing and which is upwardly curved in cross-section.

4. An apparatus according to claim 3 wherein the transition between the wall of the housing and the deflecting surface (9) is continuous.

5. An apparatus according to claim 3 or 4 wherein the angle of the curvature ($\alpha$) of the deflecting surface (9) is from 90° to 240° minus the angle at which the curved deflecting surface (9) leaves the wall of the housing.

6. An apparatus according to claim 5 wherein the angle of curvature ($\alpha$) is approximately 180° minus the angle at which the curved deflecting surface (9) leaves the wall of the housing.

7. An apparatus according to claim 5 wherein the angle of curvature ($\alpha$) is approximately 230° minus the angle at which the curved deflecting surface (9) leaves the wall of the housing.

8. An apparatus according to any one of claims 2 to 7 wherein the deflecting surface (9) extends over approximately from 50 % to 90 % of the cross-section of the housing.

9. An apparatus according to any one of claims 2 to 8 wherein the deflecting surface (9) is formed by the underside of a ring (3) fitted into the housing (1).

10. An apparatus according to claims 2 and 9 wherein the housing (1) is provided with a lid (7) and the ring (3) is suspended from the lid (7) in such a manner that its height can be adjusted.

11. An apparatus according to any one of claims 2 to 10 wherein the deflecting surface (9) is smooth.

12. An apparatus according to any one of claims 2 to 10 wherein the deflecting surface (9) is rough or has grooves, flutes or the like.

13. An apparatus according to claim 1 or 2 wherein the deflecting means are formed by at least one compressed air nozzle (33).

14. An apparatus according to claim 1 or 2 wherein the deflecting means are formed by at least one ring of compressed air nozzles (33, 34).

15. An apparatus according to claim 9 wherein the housing (1) is cylindrical and the ring (3) is so arranged in the housing that it can move freely in the vertical direction with little friction, the weight of the ring being such that it "floats" on, and is supported by, the material propelled upwards at the wall of the housing.

16. An apparatus according to claim 15 wherein the ring (3) can be loaded by additional weights (11).

17. An apparatus according to one or more of the preceding claims wherein the outer region of the centrifugal disc (2) is bent upwards at an angle, preferably of 60°.


**Revendications**

1. Installation pour préparer des granules sphériques à partir d'une substance en forme de poudre, de granules cylindriques ou non conformées, ou d'un extrudat en forme de cordons, cette installation comprenant une enveloppe (1) fixe, à symétrie de rotation, présentant un axe (4) vertical et comportant un disque (2) de centrifugation qui ferme le fond de cette enveloppe (1) et qu'un moteur peut faire tourner autour de l'axe (4) vertical de l'enveloppe, installation caractérisée en ce qu'au-dessus du disque (2) centrifugeur et à une certaine distance de celui-ci il y a des organes déviateurs (9, 33, 34) actifs, prévus en plus de l'enveloppe (1) et qui dévient obligatoirement vers l'intérieur et/ou vers le bas la substance projetée vers l'extérieur par le disque centrifugeur et entraîné vers le haut sur la paroi de l'enveloppe, avant que la substance n'atteigne son point supérieur d'inflexion "naturelle".

2. Installation selon la revendication 1, caractérisée en ce que la distance entre les organes déviateurs (9, 33, 34) et le disque (2) centrifugeur est réglable à volonté.

3. Installation selon la revendication 1 ou 2, caractérisée en ce que les organes déviateurs sont formés par une surface déflectrice (9) horizontale, annulaire, de forme incurvée vers le haut en coupe et qui prolonge la paroi de l'enveloppe.

4. Installation selon la revendication 3, caractérisée en ce que la transition entre la paroi de l'enveloppe et la surface déflectrice (9) est continue.

5. Installation selon la revendication 3 ou 4, caractérisée en ce que l'angle ($\alpha$) de secteur d'incurvation de la surface déflectrice (9) vaut de 90° à 240°, moins l'angle selon lequel la surface déflectrice (9) incurvée part de la paroi de l'enveloppe.

6. Installation selon la revendication 5, caractérisée en ce que l'angle ($\alpha$) de secteur d'incurvation vaut environ 180°, moins l'angle selon lequel la surface déflectrice (9) incurvée part de la paroi de l'enveloppe.

7. Installation selon la revendication 5, caractérisée en ce que l'angle ($\alpha$) de secteur incurvé vaut environ 230°, moins l'angle selon lequel la surface déflectrice (9) incurvée part de la paroi de l'enveloppe.

8. Installation selon l'une des revendications 2 à 7, caractérisée en ce que la surface déflectrice (9) s'étend

6

sur environ 50 % à 90 % de la section transversale de l'enveloppe.

9. Installation selon l'une des revendications 2 à 8, caractérisée en ce que la surface déflectrice (9) est formée par la partie inférieure d'un anneau (3) emboîté dans l'enveloppe (1).

10. Installation selon les revendications 2 et 9, caractérisée en ce que l'enveloppe (1) est munie d'un couvercle (7) et en ce que l'anneau (3) est suspendu à ce couvercle (7) en pouvant être réglé en hauteur.

11. Installation selon l'une des revendications 2 à 10, caractérisée en ce que la surface déflectrice (9) est lisse.

12. Installation selon l'une des revendications 2 à 10, caractérisée en ce que la surface déflectrice (9) est rugueuse, ou présente des gorges ou stries ou des cannelures ou des formes analogues.

13. Installation selon la revendication 1 ou 2, caractérisée en ce que les organes déviateurs sont constitués par au moins un ajutage (33) d'air comprimé.

14. Dispositif selon la revendication 1 ou 2, caractérisé en ce que les organes déviateurs sont constitués par au moins une couronne d'ajutage (33, 34) d'air comprimé.

15. Installation selon la revendication 9, caractérisée en ce que l'enveloppe (1) est cylindrique et l'anneau (3) est introduit et guidé dans cette enveloppe en pouvant être librement déplacée en hauteur avec peu de frottement, le poids de l'anneau étant établi de façon que cet anneau "flotte" sur la substance projetée vers le haut sur la paroi de l'enveloppe et soit supporté par cette substance.

16. Installation selon la revendication 15, caractérisée en ce que l'anneau (3) peut être chargé par des poids (11) supplémentaires.

17. Installation selon une ou plusieurs des revendications précédentes, caractérisée en ce que le disque (2) centrifugeur est cambré à sa périphérie extérieure vers le haut selon un angle valant avantageusement 60°.

Fig. 1

Fig. 2

Fig. 3

Fig. 4

**Fig. 5a**

**Fig. 5b**

**Fig. 5c**

**Fig. 5d**